(19) Europäisches Patentamt

European Patent Office

Office européen des brevets

(11) **EP 1 630 193 A1**

(12) **EUROPEAN PATENT APPLICATION**
published in accordance with Art. 158(3) EPC

(43) Date of publication:
 **01.03.2006 Bulletin 2006/09**

(51) Int Cl.:
 *C08J 9/36* (1974.07)  *B01J 20/26* (1980.01)

(21) Application number: **04728958.2**

(22) Date of filing: **22.04.2004**

(86) International application number:
 **PCT/JP2004/005816**

(87) International publication number:
 **WO 2004/099297 (18.11.2004 Gazette 2004/47)**

(84) Designated Contracting States:
 **AT BE BG CH CY CZ DE DK EE ES FI FR GB GR
 HU IE IT LI LU MC NL PL PT RO SE SI SK TR**

(30) Priority: **06.05.2003 JP 2003128356**

(71) Applicant: **Organo Corporation
 Tokyo 136-8631 (JP)**

(72) Inventors:
 • **TSUJII, Yoshinobu
  Kyoto 6110031 (JP)**
 • **FUKUDA, Takeshi
  Kyoto 6110012 (JP)**

 • **INOUE, Hiroshi,
  c/o ORGANO CORPORATION
  Tokyo 1368631 (JP)**
 • **YAMANAKA, Koji,
  c/o ORGANO CORPORATION
  Tokyo 1368631 (JP)**
 • **YOSHIDA, Akiko,
  c/o ORGANO CORPORATION
  Tokyo 1368631 (JP)**

(74) Representative: **Fiesser, Gerold Michael et al
 KNH Patentanwälte,
 Kahlhöfer, Neumann, Herzog, Fiesser,
 Isartorplatz 8
 80331 München (DE)**

(54) **GRAFT-MODIFIED ORGANIC POROUS MATERIAL AND PROCESS FOR PRODUCING THE SAME**

(57)  A graft-modified organic porous material comprising an organic porous material of 1-50 ml/g total pore volume having such an open cell structure that mesopores of 0.01-1000 $\mu$m radius are present within walls between macropores communicating with each other and, provided on the surface of the organic porous material, grafted polymer chains, **characterized in that** the density of polymer chains is at least 0.1 polymer chain per $nm^2$ of surface of organic porous material.

  Thus, there are provided a graft-modified organic porous material wherein polymer chains have been introduced at high density in surface portion of organic porous material and a process for producing the same.

EP 1 630 193 A1

**Description**

TECHNICAL FIELD

The present invention relates to a graft-modified organic porous material useful as an adsorbent, a packing material for chromatography, and an ion exchanger, and to a process for producing the same.

BACKGROUND ART

As a porous material having a continuous pore structure comprising macropores and mesopores, in which the mesopores are present in the walls of interconnected macropores, an inorganic porous material formed from silica and the like are known (Patent Document 1: USP 5,624,875). Development of application of the inorganic porous material as a packing material for chromatography has actively been undertaken. However, since this inorganic porous material is hydrophilic, complicated and expensive procedures such as a hydrophobicizing treatment of the surface and the like are required to use it as an adsorbent. What is worse, when retained in water for a long period of time, the inorganic porous material releases silicate ion produced by hydrolysis of silica in water. Therefore, it is impossible to use the inorganic porous material as an ion exchanger for manufacturing deionized water and ultrapure water. On the other hand, if used as a packing material for chromatography, the inorganic porous material has been reported to exhibit remarkably improved performance over conventional granular packing materials. However, the manufacturing method has a limitation to the types of functional groups that can be introduced.

As organic porous materials having continuous pores, porous materials possessing a particle aggregation-type structure have been disclosed in F. Svec, Science, 273, 205-211 (1996) (Non-patent Document 1) and other publications. The porous material obtained by this method has a small pore volume and an insufficient mesopore size due to the particle aggregation-type structure. For these reasons, a limitation is imposed on application of the pore material in a process with a large flow rate under a low pressure. What is worse, since conventional organic porous materials and porous ion exchangers, which are manufactured by introducing ion exchange groups into conventional organic porous materials, have many internal structural defects and possess low strength and poor durability against swelling and shrinkage, these organic porous materials and organic porous ion exchangers exhibit only insufficient separating performance when used as a packing material for chromatography.

Japanese Patent Application Laid-open No. 2002-306976 (Patent Document 2) discloses a porous ion exchanger having a continuous pore structure comprising macropores and mesopores (the macropores being interconnected with each other forming mesopores with an average diameter of 1 to 1,000 μm in the interconnected parts), and having a total pore volume of 1 to 50 ml/g, uniformly distributed ion exchange groups, and an ion exchange capacity of 0.5 mg eq. /g or more on dry basis. Although this organic porous ion exchanger exhibits excellent adsorption capability due to the markedly large pore volume and specific surface area, the ion exchanger leaves much to be desired when it comes to enhanced adsorption and ion exchange capability.

On the other hand, introducing polymer chains into the surface of a porous material having continuous pores has been studied for the purpose of promoting functions of the porous material. For example, Japanese Patent Application Laid-open No. 62-83006 (Patent Documents 3) discloses a method of grafting a porous substrate with polymers using monomers having cation exchange groups or monomers having functional groups which can be transformed into cation exchange groups by irradiating such monomers with radiation. B. C. Benicewicz et al., J. Radioanal. Nucl. Chem., 235, 31(1998) (Non-patent Document 2) discloses a method of introducing photopolymerization initiation groups into an organic porous material and grafting polymers by irradiating the organic porous material with light in the presence of monomers. Japanese Patent Application Laid-open No. 11-263819 (Patent Documents 4) discloses a method of manufacturing a grafted solid surface by causing polymerization initiation groups to be immobilized by single molecule accumulation using the Langmuir-Blodgett method on a solid surface and grafting polymer chains by graft polymerization.

Patent Document 1: USP 5, 624, 875 (Summary, Claim 1, and Example 7)
Patent Document 2: Japanese Patent Application Laid-open No. 2002-306976 (Claim 1)
Patent Document 3: Japanese Patent Application Laid-open No. 62-83006 (Claim 1, page 2, left lower column, line 6 to right lower column, line 10)
Patent Document 4: Japanese Patent Application Laid-open No. 11-263819 (Claim 7, Examples)
Nonpatent Document 1: F. Svec, Science, 273, 205-211(1996)
Nonpatent Document 2: B. C. Benicewicz et al., J. Radioanal. Nucl. Chem., 235, 31(1998)

However, since the density of polymer chains introduced by the method disclosed by the Patent Documents 1 is as low as less than 0.01 chain per 1 $nm^2$ of the porous material surface and the molecular weight of the introduced polymer chain is not uniform, the porous material exhibits its functions only insufficiently. The method disclosed by the Nonpatent Document 2 also uses a polymer with a low molecular chain density. What is worse, since the polymer is manufactured by photopolymerization, in which the polymerization does not proceed inside the porous material wherein light does not reach, formation of a graft polymer is limited to near the outside surface of the organic porous material. The method disclosed by Patent Documents 4 cannot modify the surface of pores which are present inside the porous material. For these reasons, development of an organic porous material of which the entire surface, including the surface of pores that are present inside the porous material, are modified to provide the porous material with further sophisticated functions has been called for.

Accordingly, an object of the present invention is to provide a graft-modified organic porous material of which the entire surface, including the surface of pores that are present inside the porous material, are modified, thereby providing the porous material with further sophisticated functions, and a method for manufacturing the same.

DISCLOSURE OF THE INVENTION

In view of this situation, the inventors of the present invention have conducted extensive studies. As a result, the inventors have found that (i) among graft-modified organic porous materials, those having linearly grafted polymer chains on the surface of an organic porous material and those having a density of the grafted polymer chains of 0.1 chain per 1 $nm^2$ of the porous material surface are capable of processing a large amount of gases under low pressure and can exhibit excellent adsorption characteristics and superior ion chromatography separation capability when used as a packing material for columns, and (ii) if a polymerizable surfactant having dormant species is used in preparing a water-in-oil-type emulsion, it is possible to introduce living radical polymerization active sites at a high density into the surface of an organic porous material which is produced in subsequent polymerization reaction and if living radical polymerization is further carried out by causing monomers to come into contact with such active sites, polymer chains with a uniform molecular weight can be grafted at a high density. These findings have led to the completion of the present invention.

Specifically, the present invention provides a graft-modified organic porous material having a continuous pore structure, which comprises macropores and mesopores, the macropores being interconnected with each other forming mesopores with a radius of 0.01-1,000 $\mu$m in the interconnected parts, and has a total pore volume of 1 to 50 ml/g, the surface of the organic porous material having grafted polymer chains at a density of at least 0.1 polymer chain/1 $nm^2$ of the surface area.

The present invention further provides a graft-modified organic porous material having a continuous pore structure, which comprises macropores and mesopores, the macropores being interconnected with each other forming mesopores with a radius of 0.01-1,000 $\mu$m in the interconnected parts, and has a total pore volume of 1 to 50 ml/g, the surface of the organic porous material having grafted polymer chains linearly projecting from the surface of the organic porous material.

Since the polymer chains are grafted at a high density on the entire surface of the organic porous material, including on the surface of pores that are present inside the organic porous material, the graft-modified organic porous material of the present invention can exhibit exceptionally excellent performance, if used as an adsorbent, packing material for chromatography, or ion exchanger.

The present invention further provides a process for manufacturing a graft-modified organic porous material comprising an emulsion preparation step in which a water-in-oil-type emulsion is obtained by stirring a mixture containing an oil-soluble monomer, a polymerizable surfactant having dormant species, and water, an organic porous material forming step in which an organic porous material is obtained by polymerizing the emulsion, and a graft polymerization step in which the organic porous material is caused to come in contact with a grafting monomer for living radical polymerization, whereby polymer chains are grafted onto the surface of the organic porous material. A graft-modified organic porous material having grafted polymer chains introduced at a high density, of which the manufacture had been impossible heretofore, can be manufactured comparatively easily using the process of the present invention.

BRIEF DESCRIPTION OF THE DRAWINGS

Figure 1 is a pattern diagram of the graft-modified organic porous material of the present invention.
Figure 2 is a pattern diagram showing shapes of polymer chains.
Figure 3 is a drawing showing an operation of microscopic inspection of a linearly formed polymer chain using an atomic force microscope.
Figure 4 is an SEM photograph of the organic porous material obtained in Example 1.
Figure 5 is a chart showing the relationship among the monomer conversion rate, the molecular weight of the polymer chain, and the molecular weight distribution of the polymer chain obtained in Example 1.

Figure 6 is an IR chart of the graft-modified organic porous material obtained in Example 1.

Figure 7 is a calibration line for calculating the graft ratio.

Figure 8 is a chart showing the molecular weight of the grafted polymer chain plotted against the grafted monomer weight.

Figure 9 is a pattern diagram of a conventional graft-modified organic porous material.

Figure 10 is shows an operation of microscopic inspection of polymer chains in the form of random coils using an atomic force microscope.

BEST MODE FOR CARRYING OUT THE INVENTION

The graft-modified organic porous material of the present invention has polymer chains grafted at a high density onto the entire surface, including the surface of pores of an organic porous material having a certain specified structure. The basic structure of the organic porous material having grafted polymer chains is a continuous pore structure comprising macropores and mesopores, the macropores being interconnected with each other forming mesopores with a radius of 0.01 to 1,000 $\mu$m, preferably 0.1 to 100 $\mu$m, and particularly preferably 0.5 to 80 $\mu$m, in the interconnected parts, as described in Japanese Patent Application Laid-open No. 2002-306976. Specifically, the continuous pores usually have a structure in which macropores with a radius of 0.2 to 5,000 $\mu$m are layered. The layered section has mesopores functioning as common openings, providing an open pore structure. In the open pore structure, pores formed from the macropores and mesopores become flowing paths for a liquid or gas. The overlapped macropores usually have 1 to 12 layers of macropores, with many having 3 to 10 layers of macropores. If the radius of mesopores is less than 0.01 $\mu$m, the pressure loss of gas or liquid during permeation unduly increases. On the other hand, a radius of mesopores exceeding 1,000 $\mu$m is undesirable because contact between liquid or gas with the organic porous material becomes insufficient, resulting in inferior adsorption characteristics and ion-exchanging characteristics.

The organic porous material has a total pore volume of 1 to 50 ml/g. If the total pore volume is less than 1 ml/g, the amount of liquid or gas permeating through a unit area becomes small, resulting in a low processing capacity. The total pore volume of more than 50 ml/g is undesirable because the organic porous material has poor mechanical strength.

Assuming that water is used as a liquid and air is used as a gas to permeate the organic porous material with a thickness of 10 mm, the organic porous material preferably has liquid permeability and gas permeability in the range of 100 to 100, 000 l/min·m$^2$·Mpa and 100 to 50, 000 m$^3$/min·m$^2$·Mpa, respectively. If the rate of permeation and the total pore volume are in the above ranges, the organic porous material can exhibit excellent performance such as a large contact area with liquids and gases, a smooth flow of liquids and gases, and sufficient mechanical strength when used as an adsorbent, ion exchanger, or packing material for chromatography.

The material for the matrix forming the continuous pores is an organic polymer material having a crosslinking structure. The polymer material preferably contains crosslinking structural units in the amount of 1 to 90 mol% of the total amount of all structural units forming the polymer material. If the content of the crosslinking structural unit is less than 1 mol%, the mechanical strength may be insufficient. If the crosslinking content exceeds 90mol%, a very brittle organic porous material may result.

There are no specific limitations to the type of polymer material. Examples include styrene-type polymers such as polystyrene, poly($\alpha$-methylstyrene), and poly(vinyl benzyl chloride); polyolefins such as polyethylene, polypropylene, polybutadiene, and polyisoprene; poly(halogenated olefin) such as polyvinyl chloride, polyvinylidene chloride, and polytetrafluoroethylene; polyvinyl esters such as polyvinyl acetate and polyvinyl propionate; polyvinyl alcohols which are saponified products of the polyvinyl esters; nitrile-type polymers such as polyacrylonitrile; (meth)acrylic-type polymers such as poly(methyl methacrylate) and poly(ethyl acrylate); styrene-divinylbenzene copolymer, vinyl benzyl chloride-divinylbenzene copolymer, and the like. The above polymers may be either homopolymers obtained by polymerizing one type of monomer or copolymers obtained by polymerizing two or more types of monomers. In addition, a blend of two or more polymers may be used. There are no specific limitations to the method for introducing a cross-linking component. For example, a method of introducing a crosslinking structure by copolymerizing the monomer that forms the polymer with a crosslinkable monomer having at least two polymerizable functional groups in one molecule, a method of irradiating the polymer with ultraviolet radiation such as electron beams, {%g}-ray, and the like, and a method of causing the polymer to come into contact with an oxidizer such as a peroxide, ozone, and the like can be given. Among these organic polymers, styrene-divinylbenzene copolymer and vinyl benzyl chloride-divinylbenzene copolymer are preferable in view of ease of introducing continuous pore structures and high mechanical strength.

The density of polymer chains grafted on the surface of the organic porous material is at least 0.1 chain per 1 nm$^2$ of the organic porous material. If the density is less than 0.1 per 1 nm$^2$, various functions ascribed to the grafted polymer chains are not sufficiently exhibited. The upper limit of the density is about 0. 5 polymer chain per 1 nm$^2$ of the organic porous material, although the specific density varies according to the molecular size of the introduced polymer chains. The molecular weight of one polymer chain is 500 to 500, 000. If the molecular weight is less than 500, various functions ascribed to the grafted polymer chain are not sufficiently exhibited; if the molecular weight is more than 500,000, the pore volume of organic porous material is too small for processing under low pressure. The length of the polymer chain is about 10 to 200 nm per one polymer chain. Although there are no specific limitations to the molecular weight distribution of grafted polymer chains, the narrower the molecular weight distribution, the better is the performance. Specifically, the weight average molecular weight of grafted polymer chain divided by the number average molecular weight of 1.5 or less is preferable due to enhanced functions of the graft-modified organic porous material.

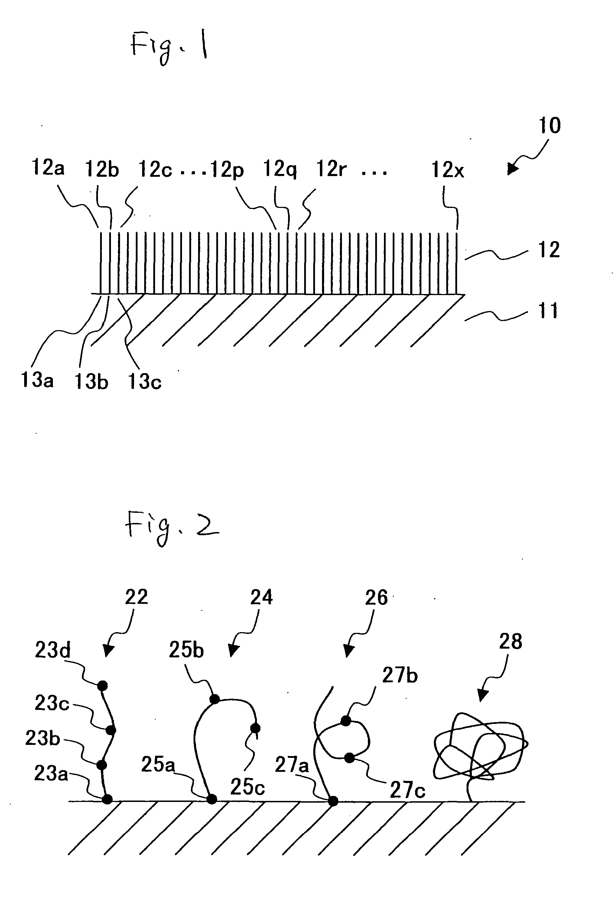

The graft-modified organic porous material of the present invention has polymer chains grafted at a higher density as compared with conventional graft-modified organic porous materials. The graft-modified organic porous material of the present invention is compared with a conventional graft-modified organic porous material using schematic drawings shown in Figure 1 and Figure 9. As shown in Figure 1, in the graft-modified organic porous material 10 of the present invention, polymer chains 12 are grafted on the surface of an organic porous material 11, wherein polymer chains are grafted at a high density in such manner that the distance between a graft point 13a at which a polymer chain 12a is grafted and a graft point 13b at which a polymer chain 12b which is present next to the polymer chain 12a is grafted is much smaller than the length of the polymer chains 12a and 12b.

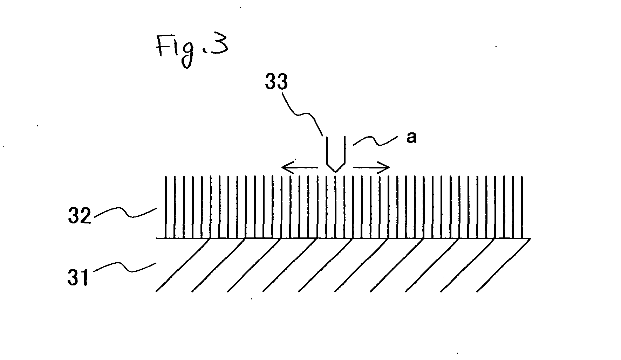

In addition, the polymer chains 12 are formed linearly projecting from the surface of the organic porous material. If polymer chains are introduced at a high density as shown in Figure 1, each polymer chain, for example, a polymer chain 12q, is kept straight by being prevented from falling down sideway or being randomly coiled due to the presence of adjacent polymer chains 12 p and 12r. The term "straight" or "linear" herein refers not only to a straight line in a geometric definition, but also to a shape of polymer chains formed always extending in the direction away from grafting points. Specifically, as schematically shown in Figure 2, in the case of a linear polymer chain 22, optional points 23b to 23d in the polymer chain 22 are aligned to the tip of the polymer chain 22 in the order of 23b → 23c → 23d. The distance of these points from the grafting point 23a increases in the same order. That is, a graft point existing closer to the tip is farthest from the graft point 23a. On the other hand, a grafting point 25c in a polymer chain 24 is closer to the tip than a grafting point 25b, but the distance of the grafting point 25c from the grafting point 25a is smaller than the distance of the grafting point 25b from the grafting point 25a. In the same way, a grafting point 27c in a polymer chain 26 is closer to the tip than a grafting point 27b, but the distance of the grafting point 27c from the grafting point 27a is smaller than the distance of the grafting point 27b from the grafting point 27a. These polymer chains 24 and 26 are not linear in the present invention. The polymer chain 28 is randomly coiled, but is neither linear nor a straight chain.

As shown in Figure 9, polymer chains 42 grafted on the surface of organic porous material 41 in conventional graft-modified organic porous material 40 are randomly coiled. Conventional graft-modified organic porous materials 40 have been manufactured by graft polymerization, in which radicals are generated by irradiating the surface of an organic porous material with radiation. Such radicals do not generate all at once, but sequentially generate. Specifically, once a radical generates at a certain active point, polymerization starts from that active point and polymer chains continue to grow until the polymerization is irreversibly terminated. More specifically, radical polymerization is initiated by a radical generated at a radical generating point 43a to form a polymer chain 42a in the form of a random coil. The next polymer chain 42b is formed at a radical generating point 43b, then, followed by formation of the next polymer chain 42c at a radical generating point 43c. In this instance, since the previously formed polymer chain 42a has a bulky configuration, this polymer chain acts as a steric hindrance for subsequently growing polymer chains and prevents other polymer chains from growing in the neighborhood. Therefore, the next polymer chain is formed at a radical active point 43b locating at a certain distance away from the radical active point 43a. Therefore, the polymer chain density is low. For example, the inertia radius of polystyrene with a molecular weight of 100,000 is 9.2 nm and, even if randomly coiled polystyrene chains are most closely packed, the density is no more than 0.004 polymer chain per $nm^2$.

The density of polymer chains grafted on the surface of the organic porous material can be measured by the following method. First, a certain amount of a graft-modified organic porous material is sampled. Polymer chains are cut from the graft-modified organic porous material to measure the grafted amount and the molecular weight of the polymer chains. The number of polymer chains per unit weight of the graft-modified organic porous material is calculated from the weight of the graft-modified organic porous material, the grafted amount, and the molecular weight of the polymer chains. The specific surface area (the surface area per unit weight) of the graft-modified organic porous material is then determined. The density of the polymer chains can be calculated by dividing the number of polymer chains per unit weight by the specific surface area. The molecular weight per one polymer chain cut from the graft-modified organic porous material and the molecular weight distribution can be determined by known methods. Specifically, polymer chains are cut from the surface of the graft-modified organic porous material and their molecular weight and molecular weight distribution are measured by GPC.

Next, an example of the method for confirming that the polymer chains are linear in the direction away from the surface of the graft-modified organic porous material will be described referring to Figure 3 and Figure 10. Figure 3 shows an atomic force microscope observation of polymer chains formed linearly projecting from the surface of the organic porous material and Figure 10 shows an atomic force microscope observation of randomly coiled polymer chains. As shown in Figure 3, an atomic force microscope 33 is caused to approach a linear polymer chains 32 grafted on the surface of an organic porous material 31 to observe the surface of the polymer chains 32. To observe the surface of the organic porous material 31, the atomic force microscope 33 must be caused to further approach inside the polymer chains 32 from the position "a" in the drawing. However, since the atomic force microscope 33 cannot be caused to further approach the inside due to high density polymer chains 32, it is impossible to observe the surface of the organic porous material 31. On the other hand, in the case of randomly coiled polymer chains 52 grafted on the surface of an organic porous material 51, the atomic force microscope 53 can be caused to approach the position "b", whereby it is possible to observe the surface of the polymer chains 52. To observe the surface of an organic porous material 51, the atomic force microscope 53 must be caused to further approach the inside of the polymer chains 52 from the position "b" in the drawing. Since the atomic force microscope 53 can be caused to further approach the inside up to the position "c", it is possible to observe the surface of the organic porous material 51. Therefore, whether or not the polymer chains are linear in the direction away from the surface of the organic porous material can be confirmed by the fact that whether or not the surface of the organic porous material can be observed by causing the atomic force microscope to approach inside the polymer chains.

In addition, the glass transition temperature of the polymer chains 12 linearly formed in the direction away from the surface of the organic porous material is more than 5°C higher than the glass transition temperature of the same polymer chains, in bulky conditions. Since the polymer chains 12 shown in Figure 1 have a high density, their conformation is in a transfixed state, that is, the polymer chain are immobilized in an elongated state and, therefore, their mobility is extremely low. Therefore, the glass transition temperature indicating a molecular mobility index is higher than the glass transition temperature of the same bulky type polymers. The same type of polymer herein indicates a polymer obtained by polymerizing the same monomers in the same manner of polymerization as those used for the polymer chains grafted in the graft-modified organic porous material and having about the same molecular weight and almost the same molecular weight distribution as the polymer chains grafted in the graft-modified organic porous material. The polymer in a bulky state herein refers to a polymer in which the molecules are freely present without receiving conformational restriction. Such a polymer is usually randomly coiled.

The lower the density of the polymer chains grafted in an organic porous material, the weaker the conformational restriction among the polymer chains and closer is the form of polymer chains to random coil. Therefore, polymer chains of which the difference of the glass transition temperature is less than 5°C is in a broken-down transfixed state. Adsorptivity and other characteristics exhibited by an organic porous material in which such polymer chains are grafted are inferior to those of the graft-modified organic porous material of the present invention.

The glass transition temperature of polymer chains can be measured using differential scanning calorimetry (DSC). Analysis of the graft-modified organic porous material by DSC provides two transitions, i.e., a transition originating from polymer chains and a transition originating from the organic porous material. The temperature of the transition originating from polymer chains indicates the glass transition temperature.

There are no specific limitations to the type of polymer material for polymer chains to be grafted. Examples include styrene-type polymers such as polystyrene, poly($\alpha$-methylstyrene), polyvinylbenzyl chloride, polybutoxystyrene, polyvinylaniline, polystyrene sodium sulfonate, poly(vinyl benzoic acid), poly(vinyl phosphoric acid), polyvinylpyridine, polydimethylaminomethylstyrene, polyvinylbenzyltrimethylammonium chloride; polyolefins such as polyethylene, polypropylene, polybutadiene, polybutene, and polyisoprene; poly(halogenated olefin) such as polyvinyl chloride, polyvinylidene chloride, and polytetrafluoroethylene; polyvinyl esters such as polyvinyl acetate and polyvinyl propionate; polyvinyl alcohols which are saponified products of the polyvinyl esters; nitrile-type polymers such as polyacrylonitrile; (meth) acrylic-type polymers such as polymethyl methacrylate, polymethacrylic acid, polyhydroxyethyl methacrylate, poly(ethylene glycol) methacrylate, polyperfluoroalkyl methacrylate, polymethacryloyloxyethyl trimethylammonium chloride, poly (ethyl acrylate), polyacrylic acid, and polydimethylaminoethyl acrylate; (meth)acrylamide-type polymers such as polyacrylamide, polymethacryl amide, poly(N-isopropylacrylamide), polydimethylaminopropylacrylamide, polyacrylamide propyltrimethylammonium chloride, and polyacrylamide-2-methylpropane sulfonate; and the like.

The above polymer chains may be either homopolymers obtained by polymerizing one type of monomer or copolymers obtained by polymerizing two or more types of monomers. The copolymer may be a random copolymer, an alternating copolymer, a block copolymer, or a graft copolymer.

In the graft-modified organic porous material of the present invention, grafted polymer chains are preferably polymer chains in which functional groups are introduced to obtain a graft-modified organic porous material with enhanced functions. Although there are no specific limitations, a sulfone group, a quaternary ammonium group, and the like can be given as functional groups.

Since polymer chains are grafted at a high density, the graft-modified organic porous material of the present invention exhibits extremely high adsorptivity and is suitable as an adsorbent for removing substances by adsorption from the materials to be purified. For example, if a fluid to be processed containing substances to be removed by adsorption is caused to pass through a cylindrical column or a prismatic column packed with the graft-modified organic porous material as an adsorbent, the substances to be removed by adsorption is efficiently adsorbed by polymer chains grafted on the surface of the graft-modified organic porous material. The raw material to be processed may be either a liquid or a gas. There are no specific limitations to the substance to be removed by adsorption. Selective adsorption and removal are possible by suitably selecting the type of polymer chains to be grafted and the type of functional groups introduced into the polymer chains according to the physical or chemical characteristics of the substance to be removed by adsorption.

The graft-modified organic porous material of the present invention is suitable as a packing material for chromatography. Analysis utilizing a high separation power is possible by causing a sample fluid to be processed to pass through, for example, a cylindrical column or a prismatic column packed with the graft-modified organic porous material as a packing material. Since the separation power is exerted by extremely thin polymer chains (with a thickness of 10 to 200 nm) grafted on the organic porous material, the graft-modified organic porous material of the present invention is almost free from a decrease in the separation power due to diffusion. Ion chromatography, reverse phase liquid chromatography, and normal phase liquid chromatography can be given as the chromatography.

The graft-modified organic porous material of the present invention is suitable also as an ion exchanger. Since ion exchanger groups are present only on the grafted polymer chains in the graft-modified organic porous material, ion exchange takes place only on the surface of the organic porous material, which ensures extremely homogeneous and rapid ion exchange as compared with that achieved by conventional ion exchangers. In addition, since the density of ion exchange groups is very high, the ion exchanger can efficiently capture even a very small amount of ions.

Next, a method for manufacturing the graft-modified organic porous material of the present invention will be described. The emulsion preparation step of the present invention is a step for preparing a water-in-oil emulsion by mixing a mixture containing an oil-soluble monomer, a polymerizable surfactant having dormant species, and water with stirring. The mixture used in the emulsion preparation step may further comprise a surfactant other than the polymerizable surfactant having dormant species.

The oil-soluble monomer denotes a lipophilic monomer that has low solubility in water. Specific examples of such an oil-soluble monomer include styrene, α-methylstyrene, t-butylstyrene, vinyl toluene, vinylbenzyl chloride, divinylbenzene, ethylene, propylene, isobutene, butadiene, isoprene, chloroprene, vinyl chloride, vinyl bromide, vinylidene chloride, tetrafluoroethylene, acrylonitrile, methacrylonitrile, vinyl acetate, methyl acrylate, ethyl acrylate, butyl acrylate, 2-ethylhexyl acrylate, 2-(perfluorobutyl)ethyl acrylate, trimethylolpropane triacrylate, butanediol diacrylate, methyl methacrylate, ethyl methacrylate, propyl methacrylate, butyl methacrylate, 2-ethylhexyl methacrylate, cyclohexyl methacrylate, benzyl methacrylate, glycidyl methacrylate, and ethylene glycol dimethacrylate. These oil-soluble monomers may be used either individually or in combination of two or more. To increase mechanical strength, it is desirable to select a crosslinking monomer such as divinylbenzene, ethylene glycol dimethacrylate, and the like as at least one oil-soluble monomer component, and incorporate such an oil-soluble monomer in an amount of 1 to 90 mol%, and preferably 3 to 80 mol%, of the total amount of the oil-soluble monomers.

The polymerizable surfactant having dormant species is a compound having a structure shown by the following formula (1).

$$A-R-B \qquad\qquad (1)$$

wherein A represents a polymerizable functional group, B represents dormant species, and R represents an organic group having 1-36 carbon atoms.

In the formula (1), the polymerizable functional group A participates in the polymerization reaction for forming the organic porous material. A typical example is a functional group having an unsaturated double bond such as a vinyl group, allyl group, isopropenyl group, 1,3-butadienyl group, styryl group, and α,β-unsaturated carbonyl group.

The dormant species B in the formula (1) is chemical species generating radicals only under specific reaction conditions or in the presence of a specific catalyst. Specifically, the dormant species do not generate radicals under the polymerization reaction conditions in the step of forming the organic porous material, but generate radicals in the later graft polymerization step. As the dormant species, nitroxyl groups that can generate stable radicals such as 2,2,6,6-tetramethylpiperidine-1-oxyl, haloalkyl groups used in atomic transfer radical polymerization (ATRP) such as trichloromethyl group, halo ester groups such as a 2-bromo-2-methylpropionic acid ester group, haloalkylphenyl groups such as a 4-chloromethylphenyl group, functional groups having a halogen such as a sulfonyl chloride group (e.g. a 4-sulfonylphenyl chloride group), and dithio ester groups used in reversible addition fragmentation chain transfer (RAFT) such as a 1-phenylethyldithiobenzoate group can be given. Among these dormant species, the dormant species used in the ARTP method are preferable due to the high polymer chain growth rate and capability of producing polymer chains with a narrow molecular weight distribution.

In the above formula (1), the organic group R having 1-36 carbon atoms may contain oxygen atoms, nitrogen atoms, sulfur atoms, phosphorous atoms, and the like in addition to carbon atoms and hydrogen atoms. As the organic group, hydrocarbon groups such as an ethylene group, propylene group, and phenylene group; polyoxyalkylene groups such as a polyoxyethylene group and polyoxypropylene groups; and the like can be given.

The polymerizable surfactants having dormant species are condensed in the oil-water interface (the surface of the organic porous material formed in the later step) of the water-in-oil-type emulsion due to the surface activity and immobilized in the organic porous material due to copolymerization of the polymerizable functional groups with oil-soluble monomers. Therefore, a large number of dormant species can be introduced onto the surface of the organic porous material.

It is sufficient for the surfactant incorporated into the mixture just to contain a polymerizable surfactant having dormant species. The surfactant may comprise one or more polymerizable surfactants having dormant species or may comprise a polymerizable surfactant having dormant species and a surfactant other than the polymerizable surfactant having dormant species. There are no specific limitations to the other surfactant inasmuch as a water-in-oil (w/o) type emulsion can be formed when the oil-soluble monomer is mixed with water. Nonionic surfactants such as sorbitan monooleate, sorbitan monolaurate, sorbitan monopalmitate, sorbitan monostearate, sorbitan trioleate, polyoxyethylene nonylphenyl ether, polyoxyethylene stearyl ether, and polyoxyethylene sorbitan monooleate; anionic surfactants such as potassium oleate, sodium dodecylbenzenesulfonate, and sodium dioctylsulfosuccinate; cationic surfactants such as a distearyldimethylammonium chloride; and amphoteric surfactants such as lauryldimethyl betaine can be given as examples. These surfactants may be used either individually or in combination of two or more. The "water-in-oil emulsion" refers to an emulsion having a continuous oil phase in which water droplets are dispersed.

Although the amounts of the polymerizable surfactants having dormant species and other surfactants to be added depend on the type of oil-soluble monomers and the size of emulsion particles (macropores of the organic porous material formed in the later step), the amount of all the surfactants to be added $(x + y)$ is selected from the range of about 1 to 70% of the total amount of all the surfactants and oil-soluble monomers $(x + y + z)$, wherein $x$ is the amount of polymerizable surfactants having dormant species, $y$ is the amount of other surfactants, and $z$ is the amount of oil-soluble monomers. The amount of the other surfactants $(y)$ is selected from the range of about 2 to 70% of the total amount of the other surfactants and oil-soluble monomers $(y + z)$.

A polymerization initiator which generates radicals by heat or light irradiation may be optionally added to the emulsion. The polymerization initiator may be either water-soluble or oil-soluble. Examples of the initiator include azobisisobutyronitrile, azobiscyclohexanenitrile, azobiscyclohexanecarbonitrile, benzoyl peroxide, potassium persulfate, ammonium persulfate, hydrogen peroxide-ferrous chloride, sodium persulfate-acidic sodium sulfite, and tetramethylthiuram disulfide. In some reaction systems, polymerization proceeds only by heat or light irradiation even if the polymerization initiator is not added. In such a case, the polymerization initiator need not be added.

The mixture containing oil-soluble monomers, surfactants, water, and, if necessary, a polymerization initiator is mixed by stirring to form a water-in-oil emulsion. There are no specific limitations to the method of mixing. A method of mixing these components all together, a method of preparing a homogeneous mixture of oil-soluble components, which include the oil-soluble monomer, surfactant, and oil-soluble polymerization initiator, and a homogeneous solution of aqueous components, which include water and the water-soluble polymerization initiator, and mixing the mixture with the solution, and other similar methods can be used. A known precipitant may be added as required.

As a mixing apparatus for forming the emulsion, a planet-type stirrer for mixing a raw material filled into a mixing vessel, which is held inclined and caused to move around a revolution axis while rotating, a conventional mixer, homogenizer, or high-pressure homogenizer, and the like can be appropriately selected according to the particle size and particle distribution of the target emulsion. The mixing conditions such as rotation frequency and stirring time can be arbitrarily determined so that an emulsion with a target particle size and a particle size distribution can be obtained. The mixing ratio by weight of the above oil-soluble components and the water-soluble components can be arbitrarily determined in the range of 2:98 to 50:50, and preferably 5:95 to 30:70.

A step of forming an organic porous material of the present invention will be described below. The step for forming the organic porous material of the present invention comprises a polymerization reaction using the water-in-oil emulsion obtained in the emulsion preparation step to form an organic porous material. Various conditions can be selected for the polymerization according to the type of monomers and polymerization initiators. For example, when azobisisobutyronitrile, benzoyl peroxide, potassium persulfate, or the like is used as the polymerization initiator, the emulsion may be polymerized with heating at 30 to 100°C for 1 to 48 hours in a sealed vessel in an inert gas atmosphere. When hydrogen peroxide-ferrous chloride, sodium persulfate-acid sodium sulfite, or the like is used as the polymerization initiator, the emulsion may be polymerized with heating at 0 to 30°C for 1 to 48 hours in a sealed vessel under an inert gas atmosphere. After the polymerization, the reaction mixture is removed from the reaction vessel and, if necessary, extracted with a solvent such as isopropanol, toluene, or tetrahydrofuran to remove the unreacted monomer and the surfactant, thereby obtaining an organic porous material. In the polymerization reaction, oil components in the water-in-oil type emulsion polymerize to form a matrix and water droplets become pores.

The mesopore radius of the organic porous material is 0.01 to 1,000 μm and the total pore volume is 1 to 50 ml/g. The continuous pore structure of the organic porous material can be observed using SEM and pore diameters of macropores and mesopores are also determined by observation using an SEM.

A graft polymerization step of the present invention will now be described. The graft polymerization step of the present invention comprises causing the organic porous material obtained in the step of forming the organic porous material to come into contact with monomers for graft polymerization and causing polymer chains to be grafted onto the surface of the organic porous material by living radical polymerization.

There are no specific limitations to the type of monomers for graft polymerization. Appropriate monomers can be selected according to the desired functions to be introduced. Examples include styrene monomers such as α-methylstyrene, vinylbenzyl chloride, butoxystyrene, vinylaniline, sodium styrene sulfonates, vinylbenzoic acid, vinylphosphoric acid, vinylpyridine, dimethylaminomethylstyrene, and vinylbenzyltrimethylammonium chloride; olefin monomers such as ethylene, propylene, butadiene, butene, and isoprene; halogenated olefin monomers such as vinyl chloride, vinylidene chloride, and tetrafluoroethylene; vinyl esters such as vinyl acetate and vinyl propionate; nitrile monomers such as acrylonitrile; acrylic monomers such as methyl methacrylate, methacrylic acid, hydroxyethyl methacrylate, ethylene glycol dimethacrylate, perfluoroalkyl methacrylate, methacryloyloxyethyltrimethylammonium chloride, ethyl acrylate, acrylic acid, and dimethylaminoethyl acrylate; (meth)acrylamide monomers such as acrylamide, N-isopropylacrylamide, methacrylamide, dimethylaminopropyl acrylamide, acrylamide propyltrimethylammonium chloride, and acrylamide-2-methylpropane sulfonic acid; and the like. Either one type of monomer or a mixture of two or more monomers may be used for graft polymerization. In addition, the monomer composition may be changed during the polymerization. Among these monomers for graft polymerization, styrene monomers, (meth)acrylic monomers, and (meth)acrylamide monomers are particularly preferable from the viewpoint of easy formation of a graft polymer by living radical polymerization.

The graft polymerization can be carried out by living radical polymerization, in which monomers for graft polymerization are caused to come into contact with grown radicals produced by cleavage of dormant species introduced onto the surface of the organic porous material. As the method for cleaving dormant species, heating, irradiation with light, contact with a catalyst, and the like are appropriately selected according to the type of dormant species. For example, contact with a catalyst can be selected as a preferable method for cleaving dormant species used in the ATRP method. A transition metal complex can be given as such a catalyst. As the metal for the transition metal complex, transition metals of the seventh to eleventh groups such as ruthenium, copper, iron, nickel, rhodium, palladium, and rhenium can be given. As the ligand, triphenylphosphine, tributylphosphine, chlorine, bromine, iodine, indene, fluorene, 2,2'-bipyridine, 4,4'-diheptyl-2,2'-bipyridine, 1,10-phenanthroline, sparteine, and the like can be given. Either a transition metal complex isolated from the reaction product of the transition metal and ligand may be added to the graft polymerization system, or it is possible to separately add a transition metal and a ligand to the graft polymerization system and cause a transition metal complex to be formed in the system.

The monomers for graft polymerization may caused to directly come into contact with the organic porous material together with a catalyst, or a solution in which the monomers are dissolved together with the catalyst in a suitable solvent may be caused to come into contact with the organic porous material. As the solvent, a good solvent for the polymer chains to be produced with a small chain transfer constant is preferable. Water, methanol, tetrahydrofuran, dioxane, anisole, diphenyl ether, benzene, toluene, and the like can be given as examples.

The molecular weight of the polymer chain grafted by the living radical polymerization can be controlled by polymerization time, and can be optionally selected according to the application of the graft-modified organic porous material. The molecular weight of the polymer chain grafted onto the organic porous material can be known by a simple method, which comprises adding a compound having dormant species to the reaction system during the living radical polymerization, conducting the living radical polymerization in the same reaction system as the organic porous material, and measuring the molecular weight of the polymer chain grafted onto the compound having dormant species using an appropriate method after the polymerization. In the living radical polymerization of the present invention, the polymer chain grafted onto the organic porous material and the polymer chain grafted onto the compound having dormant species added to the living radical polymerization reaction system have almost the same molecular weight and molecular weight distribution.

Although the conditions of living radical polymerization depend on the type of dormant species introduced, the polymerization temperature is usually about 20 to 150°C. Although dependent on the type of dormant species introduced or the set value of polymer chain molecular weight to be grafted, the polymerization time is usually about 10 minutes to 72 hours.

In the living radical polymerization, since the polymer chains start to grow almost simultaneously from active sites in which the introduced dormant species are present, previously grown polymer chains do not sterically hinder the growth of later growing polymer chains as in the case of conventional graft polymerization. Therefore, even if the distance between the active sites is small, growing polymer chains do not mutually hinder polymerization of the other polymer chains, thereby grafting polymer chains on the surface of the organic porous material at a high density.

In addition, since the difference of the growth rate of polymer chains is small in the living radical polymerization, polymer chains with a narrow molecular weight distribution can be grafted. Therefore, a graft-modified organic porous material with high separation capability can be obtained.

The polymer chains grafted in the above-mentioned graft polymerization step can be provided with higher functions by introducing functional groups by a polymer reaction or by converting the functional groups in the polymer chains. As the polymer reaction, various types can be selected according to an adsorption target, a detection target, and the like. For example, as a method for introducing a sulfonic acid group, a method of grafting polystyrene onto the organic porous material, then sulfonating using chlorosulfuric acid, concentrated sulfuric acid, or fuming sulfuric acid, a method of grafting polyglycidyl methacrylate and introducing a sulfonic acid group by reacting with sodium sulfite, and the like can be given. As a method for introducing a quaternary ammonium group, a method of grafting polystyrene onto an organic porous material, introducing a chloromethyl group using chloromethyl ether or the like, and reacting with a tertiary amine, a method of grafting polyvinylbenzyl chloride onto an organic porous material and reacting with a tertiary amine, and the like can be given.

EXAMPLES

The present invention will be described in more detail by examples, which should not be construed as limiting the present invention.

Example 1

(Emulsion preparation step)

Styrene (7.2 g), divinylbenzene (1.8 g), sorbitan monooleate (1.0 g), polyethylene glycol 2-bromo-2-methyl propionic acid ester methacrylate (0.1 g), and azobisisobutyronitrile (0.12 g) were mixed and homogeneously dissolved. The above homogeneously mixed solution was added to deionized water (80 g). The mixture was stirred using a planet-type stirrer (vacuum agitation defoaming mixer, manufactured by EME Co., Ltd.) under reduced pressure of 13.3 kPa, at a revolution rate (rotation around a revolution axis) of 1,000 rpm, and at a rotation of 330 rpm for two minutes to obtain a water-in-oil emulsion.

(Organic porous material forming step)

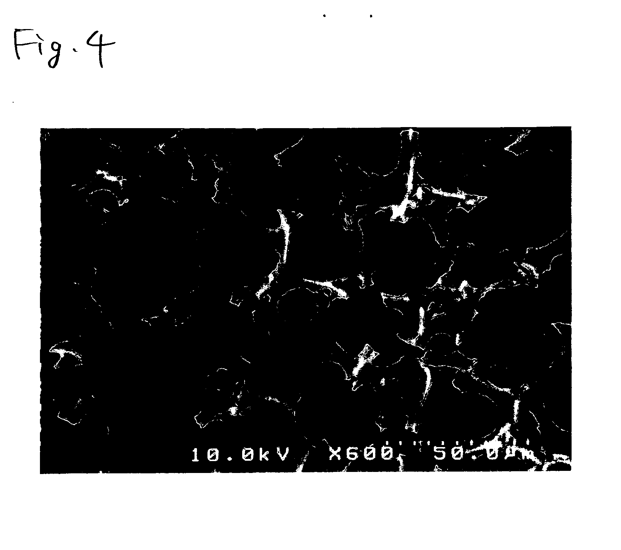

After completion of the emulsion preparation step, the reaction system was sufficiently replaced with nitrogen and sealed. Then, the emulsion was allowed to stand at 70°C for 14 hours to polymerize. After the polymerization, the reaction product was removed from the vessel, dipped in tetrahydrofuran, and extracted with toluene for 10 hours using a Soxhlet extractor, and dried to isolate polymer. The inner structure of the organic porous material of the styrene/divinylbenzene copolymer thus obtained was inspected by SEM. The results are shown in Figure 4. As is clear from Figure 4, the organic porous material has a continuous porous structure and contains macropores and mesopores, respectively having a uniform size. The specific surface area of the organic porous material measured by the BET method was 1.4 m$^2$/g. The pore volume and pore distribution were measured by the mercury porosimetry method. The pore volume was 9.5 ml/g and the peak radius of the pore distribution curve was 10.9 $\mu$m.

(Graft polymerization step)

Four graft polymerization containers were prepared. The organic porous material obtained in the above organic porous material forming step was charged into each container and dipped into anisole. Next, methyl methacrylate (50 wt% of the organic porous material), cuprous bromide (10 mmol /1), sparteine (20 mmol /1), and ethyl 2-bromo-2-methylpropionate (1/1,000 mol of the methyl methacrylate added) were added and homogeneously dissolved and deaerated. The containers were sealed and polymerization was conducted for 2, 4, 6, and 8 hours at 70°C. After polymerization, the solid was removed from liquid, extracted with toluene for 10 hours using a Soxhlet extractor, and dried to isolate the graft-modified organic porous material. The liquid component was found to contain a living radical polymerization product of 2-bromo-2-methylethylpropionate dissolved therein.

(Calculation of density of polymer chains in graft-modified organic porous material)

A liquid component in which a living radical polymerization product of 2-bromo-2-methylethylpropionate is dissolved was analyzed using GPC to determine the molecular weight (number average molecular weight: Mn) and the molecular weight distribution (Mw/Mn) of the polymer. The resultant molecular weight and molecular weight distribution are approximately the same as the molecular weight and molecular weight distribution of the polymer chains grafted onto the graft-modified organic porous material. Moreover, the monomer conversion rate was calculated from the amount of unreacted methyl methacrylate. Figure 5 shows relationship between the monomer conversion rate and the molecular weight of polymer chains, and the molecular weight distribution of the polymer chain during polymerization. It was confirmed that the living polymerization was proceeding from the fact that the molecular weight of the polymer chain increased with the increase of the monomer conversion rate and that the molecular weight distribution was narrow.

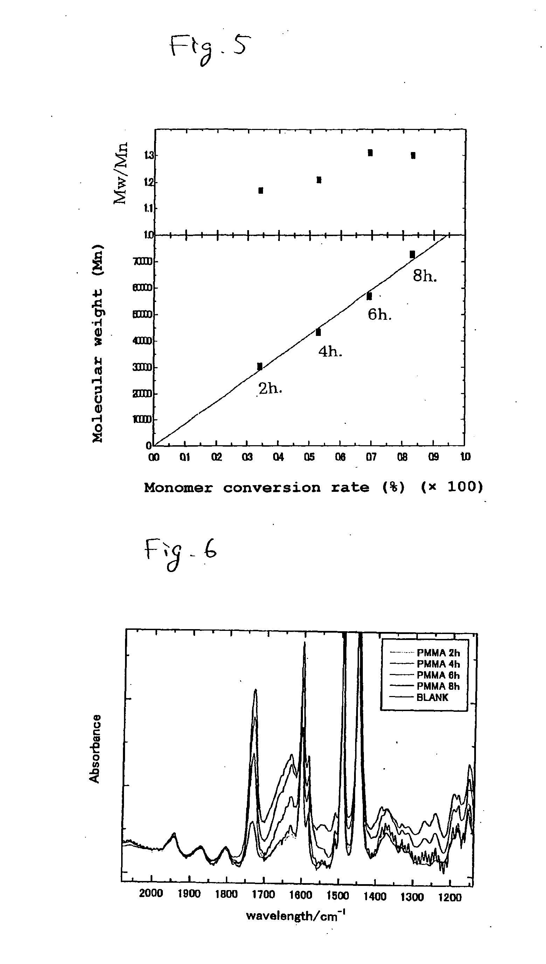

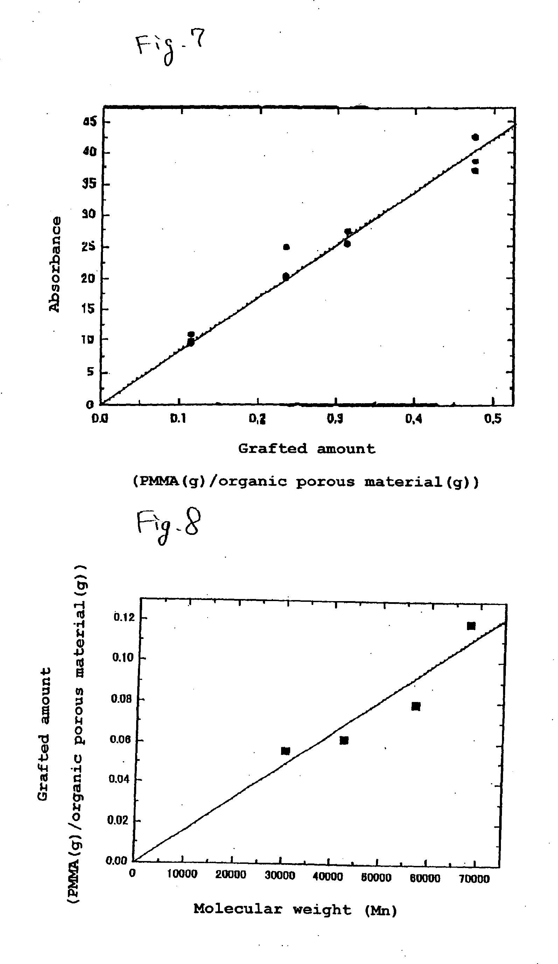

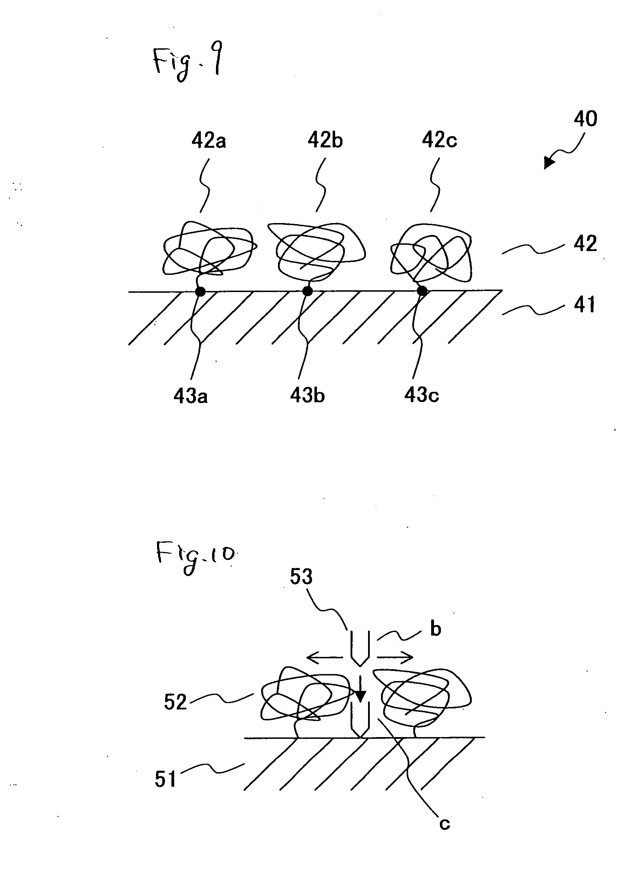

In addition, the graft-modified organic porous material was subjected to IR analysis. The results are shown in Figure 6, which indicates an increase in the absorption at 1730 cm$^{-1}$ characteristic to carbonyl groups (absorption characteristic to polymethylmethacrylate which forms the grafted polymer chain) along with an increase of the polymerization time, confirming progress of a living polymerization. The weight of PMMA grafted per unit weight of the organic porous material (PMMA (g) /organic porous material (g), hereinafter referred to as "grafted amount") was determined using the absorbance and the calibration curve shown in Figure 7. The calibration curve was prepared from the sample which was prepared by mixing separately prepared polymethylmethacrylate (PMMA) and the organic porous material obtained in the above-mentioned organic porous material forming step. The grafted amount is plotted along the horizontal axis and the absorbance is plotted along the vertical axis.

Next, based on Figure 8, in which the grafted amount in each polymerization hour is plotted along the vertical axis and the molecular weight of grafted polymer chains is plotted along the horizontal axis, the relation between the molecular weight (x) and the grafted amount (y) was determined to obtain the formula, $y = 1.64 \times 10^{-6}x$. The methyl methacrylate (MMA) molecular weight of 100 of was substituted for x to obtain the value y of $1.64 \times 10^{-4}$. This value indicates the weight of MMA grafted when all the polymer chains present per unit weight of the organic porous material are elongated by one molecule (molecular weight: 100). The number of MMA molecules grafted when all the polymer chains present per unit weight of the organic porous material are elongated by one molecule determined from the weight of MMA was $9.87 \times 10^{17}$ ($1.64 \times 10^{-4}$ g = 1. $64 \times 10^{-6}$ mol = $9.87 \times 10^{17}$ molecules (the Avogadro's number was assumed to be $6.02 \times 10^{23}$)). Since the number of molecules indicates the number of polymer chains present per unit weight of the organic porous material, the density of polymer chain can be determined by dividing the number of molecules by the value of specific surface area $1.4 \times 10^{18}$ nm$^2$ /g (1.4 m$^2$/g). The density was found to be 0.7 polymer chain/nm$^2$. The reciprocal of the density, which indicates the specific surface area occupied by one polymer chain, was 1. 4 nm$^2$/ polymer chain. Based on the fact that the cross-section area of the monomer MMA molecule is 0.8 nm$^2$ and the specific surface area occupied by one polymer chain is no more than 1.8 times the cross-section area of the MMA molecule, it was confirmed that there are no chances that the polymer chain has a conformation other than a straight chain. Specifically, the polymer chain of the graft-modified organic porous material was confirmed to linearly project from the surface of the organic porous material.

TABLE 1

| Polymerization time (hr) | 2 | 4 | 6 | 8 |
|---|---|---|---|---|
| Monomer conversion rate (%) | 34 | 52 | 70 | 82 |
| Molecular weight (Mn) | 31,000 | 43,000 | 55,000 | 73,000 |
| Molecular weight distribution (Mw/Mn) | 1.17 | 1.22 | 1.31 | 1.30 |
| Grafted amount | 0.055 | 0.062 | 0.080 | 0.118 |

Example 2

(Emulsion preparation step and organic porous material forming step)

An organic porous material was prepared in the same manner as in Example 1 except that the amount of polyethylene-glycol 2-methyl-2-bromopropionic acid ester methacrylate used in the emulsion preparation step was increased to 0.2 g from 0.1 g. Inspection by SEM confirmed that the resultant organic porous material had the same continuous pore structure as that possessed by the organic porous material obtained in Example 1, a specific surface area of 1.2 m$^2$/g, a pore volume of 8.4 ml/g, and a peak radius in the pore distribution curve of 10.5 μm.

(Graft polymerization step)

A graft-modified organic porous material was prepared in the same manner as in Example 1 except that the polymerization time in graft polymerization step was increased to 12 hours from two hours.

(Calculation of density of polymer chains in graft-modified organic porous material)

The density of polymer chains of the resultant graft-modified organic porous material was determined in the same manner as in Example 1 to confirm that the density was 1.2 polymer chain/nm$^2$. The reciprocals of the density was 0.8 nm$^2$/polymer chain. Based on the fact that the specific surface area occupied by one polymer chain (0.8 nm$^2$/

polymer chain) was almost the same as the cross-section area of the monomer MMA molecule (0.8 nm$^2$), it can be concluded that there are no chances for the polymer chain to have a conformation other than a straight chain and that the polymer chain of the graft-modified organic porous material was confirmed to linearly project from the surface of the organic porous material.

INDUSTRIAL APPLICABILITY

The graft-modified organic porous material has extremely high adsorptivity, excels in chromatographic separation power, and exhibits rapid and uniform ion-exchange action due to polymer chains densely grafted on the pore surface. Therefore, the graft-modified organic porous material is useful and can be applied to a wide variety of fields as a filter, adsorbent, substitute for existing ion exchangers, as a packing material for EDI, ion chromatography, reverse phase liquid chromatography, and normal phase liquid chromatography, and as a solid acid catalyst and a solid base catalyst. In addition, if the method for manufacturing of the graft-modified organic porous material is used, polymer chains can be grafted on an organic porous material at high density and the graft-modified organic porous material having the above-mentioned outstanding performance can be manufactured.

**Claims**

1. A graft-modified organic porous material having a continuous pore structure, which comprises macropores and mesopores, the macropores being interconnected with each other forming mesopores with a radius of 0.01 to 1,000 $\mu$m in the interconnected parts, and has a total pore volume of 1 to 50 ml/g, the surface of the organic porous material having grafted polymer chains at a density of at least 0.1 polymer chain/1 nm$^2$ of the surface area.

2. A graft-modified organic porous material having a continuous pore structure, which comprises macropores and mesopores, the macropores being interconnected with each other forming mesopores with a radius of 0.01 to 1,000 $\mu$m in the interconnected parts, and has a total pore volume of 1 to 50 ml/g, the surface of the organic porous material having grafted polymer chains linearly formed in the direction opposite to the surface of the organic porous material.

3. The graft-modified organic porous material according to claim 1 or claim 2, used as an adsorbent.

4. The graft-modified organic porous material according to claim 1 or claim 2, used as a packing material for chromatography.

5. The graft-modified organic porous material according to claim 1 or claim 2, used as an ion-exchanger.

6. A process for manufacturing a graft-modified organic porous material comprising an emulsion preparation step in which a water-in-oil-type emulsion is obtained by stirring a mixture containing an oil-soluble monomer, a polymerizable surfactant having a dormant species, and water, an organic porous material forming step in which an organic porous material is obtained by polymerizing the emulsion, and a graft polymerization step in which the organic porous material is caused to come into contact with a grafting monomer for living radical polymerization, whereby polymer chains are grafted onto the surface of the organic porous material.

7. The process for manufacturing a graft-modified organic porous material according to claim 6, wherein the mixture used in the emulsion preparation step further comprises a surfactant other than the polymerizable surfactant having dormant species.

Fig. 1

Fig. 2

Fig.3

Fig. 4

Fig. 5

Monomer conversion rate (%) (× 100)

Fig. 6

Fig. 7

Grafted amount

(PMMA(g)/organic porous material(g))

Fig. 8

Molecular weight (Mn)

Fig. 9

40

42a      42b      42c

42

41

43a      43b      43c

Fig. 10

53

b

52

c

51

<div align="center">

**INTERNATIONAL SEARCH REPORT**

</div>

| | International application No. |
|---|---|
| | PCT/JP2004/005816 |

| A. CLASSIFICATION OF SUBJECT MATTER |
|---|
| Int.Cl$^7$  C08J9/36, B01J20/26, G01N30/48 |

According to International Patent Classification (IPC) or to both national classification and IPC

| B. FIELDS SEARCHED |
|---|
| Minimum documentation searched (classification system followed by classification symbols) |
| Int.Cl$^7$  C08J9/36, 7/16, B01J20/26, G01N30/48, C08F291/00 |

| Documentation searched other than minimum documentation to the extent that such documents are included in the fields searched |
|---|
| Jitsuyo Shinan Koho            1926-1996   Jitsuyo Shinan Toroku Koho   1996-2004 |
| Kokai Jitsuyo Shinan Koho     1971-2004   Toroku Jitsuyo Shinan Koho   1994-2004 |

| Electronic data base consulted during the international search (name of data base and, where practicable, search terms used) |
|---|
| |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2002-306976 A   (Organo Corp.), 22 October, 2002 (22.10.02), Claims; Par. Nos. [0017] to [0023] & WO 2002/088771 A1       & US 20030189005 A1 & EP 1386938 A1 | 1-7 |
| A | JP 2002-239358 A   (Takeo YAMAGUCHI, Shin'ichi NAKAO), 27 August, 2002 (27.08.02), Claims (Family: none) | 1-2 |
| A | JP 11-263819 A   (Japan Science and Technology Corp.), 28 September, 1999 (28.09.99), Claims (Family: none) | 6-7 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 July, 2004 (01.07.04) | 20 July, 2004 (20.07.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/005816 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 61-283345 A (Denki Kagaku Kogyo Kabushiki Kaisha), 13 December, 1986 (13.12.86), Claims (Family: none) | 1-7 |
| A | JP 62-83006 A (Asahi Chemical Industry Co., Ltd.), 16 April, 1987 (16.04.87), Claims (Family: none) | 1-7 |
| P,A | JP 2003-166982 A (Organo Corp.), 13 June, 2003 (13.06.03), Claims & WO 2002/083771 A1 & US 20030189005 A1 & EP 1386938 A1 | 1-7 |

Form PCT/ISA/210 (continuation of second sheet) (January 2004)